# EUROPEAN PATENT APPLICATION

(11) **EP 4 756 631 A1**
(43) Date of publication of application: **10.06.2026**
(21) Application number: 24223563.8
(22) Date of filing: 27.12.2024
(51) Int. Cl.: G06F 13/42

(54) **METHODS AND APPARATUSES FOR IMPLEMENTING CLOCK EXTENSION BASED ON AN INTEGRATED CIRCUIT BUS IIC**

(30) Priority: 04.12.2024 CN 202411776943
(71) Applicant: New H3C Technologies Co., Ltd., Hangzhou, Zhejiang 310052 (CN)
(72) Inventor: CHENG, Xiaoliang, Beijing (CN); LIU, Huan, Beijing (CN)
(74) Representative: Bandpay & Greuter

(57) **Abstract**

The present application provides methods and apparatuses for implementing clock extension based on an integrated circuit bus IIC. The present application additionally provides a clock extension indication signal line between an IIC master device and a control device in a communication control system. The IIC master device sends a first notification to the control device through the clock extension indication signal line to enable clock extension, so that the control device maintains a pin of a slave device SCL in a low-level state, to suspend data transmission. In the absence of a second notification sent by the IIC master device to the control device through the clock extension indication signal line to cancel clock extension, even if the specified period of the SCL clock cycle ends, the slave device SCL pin connected to the slave device SCL will not be controlled to be in a high impedance state as it would be in the conventional IIC data transmission mechanism. Instead, the SCL pin will be maintained at a low level until the second notification is received, breaking the limitation of the existing data transmission mechanism and implementing triggering of clock extension mechanism by the IIC master device.

## Description

### TECHNICAL FIELD

The present application relates to the field of communication technology, particularly to methods and apparatuses for implementing clock extension based on an integrated circuit bus IIC.

### BACKGROUND

Clock extension is an important mechanism in the Inter Integrated Circuit (IIC) communication protocol, which refers to suspension of data transmission by either a master or slave IIC device holding a serial clock line (SCL) signal line at a low level until the SCL transitions from low to high, to allow resumption of the data transmission. For example, in a process of data transmission between an IIC master device and an IIC slave device, if a task of higher priority is received, the IIC master device may control an SCL pin connected to the IIC slave device to be low, so that the SCL signal line is held low to prioritize processing the task of higher priority. After completing the task of higher priority, the IIC master device may control the SCL pin connected to the IIC slave device to be in a high impedance state, resuming data transmission with the IIC slave device.

In practical applications, in order to apply an IIC bus more flexibly, the IIC master device is usually used to communicate with the IIC slave device through a control device. Without a direct connection between the SCLs of the IIC master device and the IIC slave device, the clock extension mechanism in the IIC communication protocol cannot be implemented.

### SUMMARY

In view of this, the present application provides a communication control system, methods and apparatuses based on an integrated circuit bus IIC, to implement the clock extension mechanism in the IIC communication protocol without direct connection between SCLs of an IIC master device and an IIC slave device through a control device.

The technical solution provided in this application is as follows.

According to an embodiment in a first aspect of the present application, there is provided a method for implementing clock extension based on an integrated circuit bus IIC, wherein the method is applied to an IIC master device in a communication control system; the communication control system further includes an IIC slave device connected to the IIC master device, and a control device connected between the IIC master device and the IIC slave device; a clock extension indication signal line is also connected between the IIC master device and the control device; the method includes:
if determining to enable clock extension, sending a first notification to the control device through the clock extension indication signal line, so that the control device maintains a pin on the control device which is connected to a slave device SCL in a low-level state based on the first notification; wherein when the control device receives a falling edge of an SCL clock signal, the control device controls the pin on the control device which is connected to the slave device SCL be in a low-level state and controls a pin on the control device which is connected to a master device SCL to be in a low-level state;
if determining to cancel clock extension, sending a second notification to the control device through the clock extension indication signal line, so that the control device controls the pin on the control device which is connected to the slave device SCL to be in a high impedance state based on the second notification.

Optionally, the control device includes a slave device SCL control component; the slave device SCL control component is configured to control a state of the pin on the control device which is connected to the slave device SCL;
the IIC master device is connected to the slave device SCL control component through the clock extension indication signal line.

Optionally, the pin on the IIC master device which is connected to the master device SCL is in a high impedance state after the IIC master device determines to cancel clock extension.

Optionally, the first notification is sent within a specified period of an SCL clock cycle after the falling edge of the SCL clock signal is sent, and the SCL clock cycle is a preset duration from a beginning of the falling edge of the SCL clock signal.

Optionally, the SCL clock cycle includes an SCL low-level period and an SCL high-level period, the SCL high-level period includes a data transmission period, and the specified period includes:
the SCL low-level period and the SCL high-level period except the data transmission period.

According to an embodiment in a second aspect of the present application, there is provided a method for implementing clock extension based on an integrated circuit bus IIC, wherein the method is applied to a control device in a communication control system; the communication control system further includes an IIC master device and an IIC slave device connected to the IIC master device; the control device is connected between the IIC master device and the IIC slave device, and a clock extension indication signal line is also connected between the control device and the IIC master device; the method includes:
if receiving a first notification sent by the IIC master device through the clock extension indication signal line between the control device and the IIC master device, maintaining a pin on the control device which is connected to a slave device SCL in a low-level state based on the first notification, wherein when the control device receives a falling edge of the SCL clock signal, the control device controls the pin on the control device which is connected to the slave device SCL to be in a low-level state and controls a pin on the control device which is connected to a master device SCL to be in a low-level state;
if receiving a second notification sent by the IIC master device through the clock extension indication signal line between the control device and the IIC master device, controlling the pin on the control device which is connected to the slave device SCL to be in a high impedance state based on the second notification;
if detecting that a level of the slave device SCL transitions from low to high, controlling the pin on the control device which is connected to the master device SCL to be in a high impedance state.

Optionally, the control device includes a slave device SCL control component; the slave device SCL control component is configured to control a state of the pin on the control device which is connected to the slave device SCL;
the slave device SCL control component is connected to the IIC master device through the clock extension indication signal line.

Optionally, the first notification is sent within a specified period of an SCL clock cycle after the IIC master device sends the falling edge of the SCL clock signal; the SCL clock cycle is one SCL clock cycle from a beginning of the falling edge of the SCL clock signal sent by the master device SCL that was received most recently.

Optionally, the SCL clock cycle includes an SCL low-level period and an SCL high-level period, the SCL high-level period includes a data transmission period, and the specified period includes:
the SCL low-level period and the SCL high-level period except the data transmission period.

Optionally, the first notification is sent during the SCL low-level period of the SCL clock cycle after the IIC master device sends the falling edge of the SCL clock signal, and the method further includes:
if receiving a second notification sent by the IIC master device through the clock extension indication signal line, checking whether a current time is before an end of the SCL low-level period of the SCL clock cycle; if so, ending the SCL clock cycle; if not, continuing to perform the operation of controlling the pin on the control device which is connected to the slave device SCL to be in a high impedance state based on the second notification.

Optionally, the first notification is sent during the SCL low-level period of the SCL clock cycle after the IIC master device sends the falling edge of the SCL clock signal, and the method further includes:
if no second notification sent by the IIC master device through the clock extension indication signal line is received by the end of the SCL low-level period in the SCL clock cycle, continuing to maintain the pin on the control device which is connected to the slave device SCL in a low-level state.

Optionally, the first notification is sent during the SCL high-level period except the data transmission period of the SCL clock cycle after the IIC master device sends the falling edge of the SCL clock signal, the method further includes:
ending the SCL clock cycle and starting a new SCL clock cycle; if a second notification is received from the IIC master device through the clock extension indication signal line, checking whether a current time is before an end of the SCL low-level period in the new SCL clock cycle; if so, ending the new SCL clock cycle; if not, continuing to perform the operation of controlling the pin on the control device which is connected to the slave device SCL to be in a high impedance state based on the second notification; the pin on the IIC master device which is connected to the master device SCL is in a low-level state after the IIC master device determines to enable clock extension.

Optionally, the first notification is sent during the SCL high-level period except the data transmission period of the SCL clock cycle after the IIC master device sends the falling edge of the SCL clock signal, the method further includes:
ending the SCL clock cycle and starting a new SCL clock cycle; if no second notification sent by the IIC master device through the clock extension indication signal line is received by an end of the SCL low-level period in the new SCL clock cycle, continuing to maintain the pin on the control device which is connected to the slave device SCL in a low-level state; the pin on the IIC master device which is connected to the master device SCL is in a low-level state after the IIC master device determines to enable clock extension.

According to an embodiment in a third aspect of the present application, there is provided an apparatus for implementing clock extension based on an integrated circuit bus IIC, wherein the apparatus is applied to an IIC master device in a communication control system; the communication control system further includes an IIC slave device connected to the IIC master device, and a control device connected between the IIC master device and the IIC slave device; a clock extension indication signal line is also connected between the IIC master device and the control device; the apparatus includes:
an enabling unit configured to, if determining to enable clock extension, send a first notification to the control device through the clock extension indication signal line, so that the control device maintains a pin on the control device which is connected to a slave device SCL in a low-level state based on the first notification; wherein when the control device receives a falling edge of an SCL clock signal, the control device controls the pin on the control device which is connected to the slave device SCL to be in a low-level state and controls a pin on the control device which is connected to a master device SCL to be in a low-level state;
a cancelling unit configured to, if determining to cancel clock extension, send a second notification to the control device through the clock extension indication signal line, so that the control device controls the pin on the control device which is connected to the slave device SCL based on the second notification to be in a high impedance state.

According to an embodiment in a fourth aspect of the present application, there is provided an apparatus for implementing clock extension based on an integrated circuit bus IIC, wherein the apparatus is applied to a control device in a communication control system; the communication control system further includes an IIC master device and an IIC slave device connected to the IIC master device; the control device is connected between the IIC master device and the IIC slave device, and a clock extension indication signal line is also connected between the control device and the IIC master device; the apparatus includes:
a maintaining unit configured to, if receiving a first notification sent by the IIC master device through the clock extension indication signal line between the control device and the IIC master device, maintain a pin on the control device which is connected to a slave device SCL in a low-level state based on the first notification, wherein when the control device receives a falling edge of an SCL clock signal, the control device controls the pin on the control device which is connected to the slave device SCL to be in a low-level state and controls a pin on the control device which is connected to a master device SCL to be in a low-level state;
a control unit configured to, if receiving a second notification sent by the IIC master device through the clock extension indication signal line between the control device and the IIC master device, control the pin on the control device which is connected to the slave device SCL to be in a high impedance state based on the second notification; if detecting that a level of the slave device SCL transitions from low to high, control the pin on the control device which is connected to the master device SCL to be in a high impedance state.

According to an embodiment in a fifth aspect of the present application, there is provided an IIC master device, which is an IIC master device in a communication control system. The communication control system further includes an IIC slave device connected to the IIC master device, and a control device connected between the IIC master device and the IIC slave device. A clock extension indication signal line is also connected between the IIC master device and the control device. The IIC master device is configured to perform the method as described in the first aspect.

According to an embodiment in a fifth aspect of the present application, there is provided a control device, which is a control device in a communication control system. The communication control system further includes an IIC master device and an IIC slave device connected to the IIC master device. The control device is connected between the IIC master device and the IIC slave device, and a clock extension indication signal line is also connected between the IIC master device and the control device. The control device includes:
a frequency counter connected for communication to a slave device SCL control module, the frequency counter configured to count at a preset frequency and upon the counting reaches an end of a specified period, trigger the slave device SCL control module to control a pin on the control device which is connected to the slave device SCL to be in a high impedance state;
the slave device SCL control module connected for communication to the frequency counter and a master-slave SCL control module, connected to the IIC slave device through the slave device SCL, and connected to the IIC master device through the clock extension indication signal line, the slave device SCL control module configured to control a state of the pin on the control device which is connected to the slave device SCL based on signals sent by the master-slave SCL control module, the frequency counter, and the clock extension indication signal line;
a first edge detection module connected to the IIC master device through the master device SCL and connected for communication to the master-slave SCL control module, the first edge detection module configured to detect a level transition of the master device SCL;
the master-slave SCL control module connected for communication to the first edge detection module, the slave device SCL control module, and a second edge detection module, connected to the IIC master device through the master device SCL, the master-slave SCL control module configured to, based on detection results of the first edge detection module and the second edge detection module, control a state of a pin on the control device which is connected to the master device SCL and control the slave device SCL control module to cause the slave device SCL control module to control the state of the pin on the control device which is connected to the slave device SCL;
the second edge detection module connected to the IIC slave device through the slave device SCL and connected for communication to the master-slave SCL control module, the second edge detection module configured to detect a level transition of the slave device SCL.

As can be seen from the above technical solutions, the present application additionally provides a clock extension indication signal line between the IIC master device and the control device in the communication control system. When the IIC master device determines to enable clock extension, the IIC master device sends a first notification to the control device through the clock extension indication signal line, so that the control device maintains the slave device SCL pin on the control device which is connected to the slave device SCL in a low-level state based on the first notification. In the absence of a clock extension invalid indication signal, even if the specified period of the SCL clock cycle ends, the control device will not control the slave device SCL pin on the control device which is connected to the slave device SCL in a high impedance state as it would do in the conventional data transmission mechanism. Instead, breaking the limitations of the existing IIC data transmission mechanism, the control device will continue to maintain the slave device SCL pin on the control device which is connected to the slave device SCL in a low-level state to suspend data transmission, until the master device sends a second notification to the control device through the clock extension indication signal line to cancel the clock extension. Only then, the slave device SCL pin connected to the slave device SCL is controlled to be in a high impedance state to resume data transmission, so that the clock extension mechanism in the IIC communication protocol can be implemented without direct connection between SCLs of an IIC master device and an IIC slave device.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
Fig. 1 is a schematic structural diagram of a communication control system provided in an embodiment of the present application;
Fig. 2 is a flowchart of a method for implementing clock extension based on an integrated circuit bus IIC provided in an embodiment of the present application;
Fig. 3 is a flowchart of another method for implementing clock extension based on an integrated circuit bus IIC provided in an embodiment of the present application;
Fig. 4 is a schematic diagram of specific modules of a communication control system provided in an embodiment of the present application;
Fig. 5 is a schematic diagram of a specific structure of a communication control system of multiple IIC master devices provided in an embodiment of the present application;
Fig. 6 is a schematic diagram of specific modules of another communication control system provided in an embodiment of the present application;
Fig. 7 is a schematic structural diagram of an apparatus for implementing clock extension based on an integrated circuit bus IIC provided in an embodiment of the present application;
Fig. 8 is a schematic structural diagram of another apparatus for implementing clock extension based on an integrated circuit bus IIC provided in an embodiment of the present application.

### DETAILED DESCRIPTION

In order to enable those skilled in the art to better understand technical solutions of embodiments of the present application, and to make the above objects, technical solutions and advantages of the embodiments of the present application more apparent, the present disclosure will be described in detail the technical solutions of the embodiments of the present application will be described in more detail with reference to the accompanying drawings.

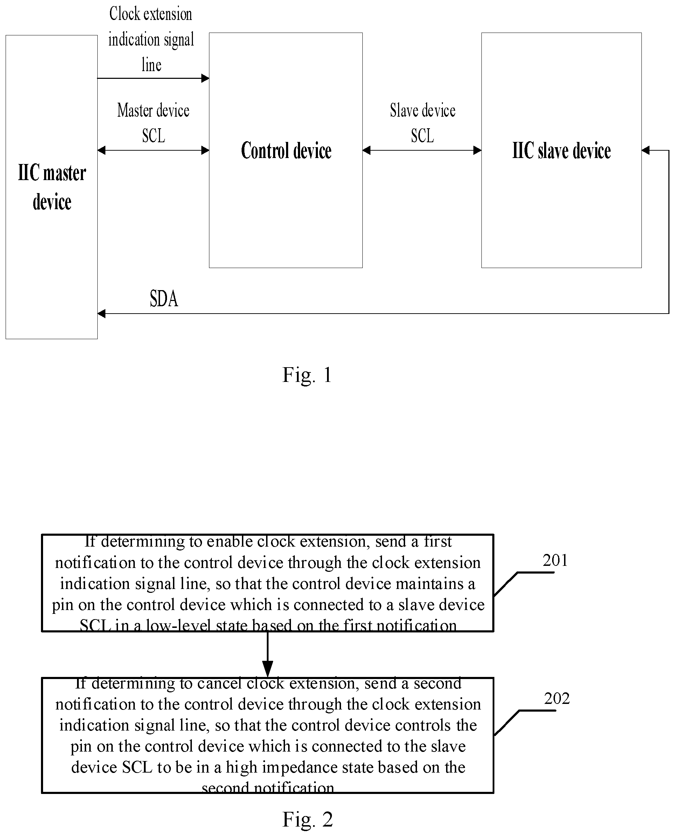

Firstly, a brief description of a communication control system applied in the present application will be provided in conjunction with Fig. 1.

Refer to Fig. 1, which is a schematic structural diagram of a communication control system provided in an embodiment of the present application.

As shown in Fig. 1, the communication control system includes an integrated circuit bus (IIC) master device, an IIC slave device connected to the IIC master device, and a control device connected between the IIC master device and the IIC slave device. A clock extension indication signal line is also connected between the IIC master device and the control device.

In this embodiment, the IIC master device and the control device are connected through a master device serial clock line (SCL) and a clock extension indication signal line; the IIC slave device and the control device are connected through a slave device SCL; and the IIC master device and the IIC slave device are connected through a serial data line (SDA).

In this embodiment, the control device may be a Complex Programmable Logic Device (CPLD) or a Field Programmable Gate Array (FPGA), which is not limited in the present application.

As an embodiment, the control device includes a control component for controlling the slave device SCL. The control component is configured to control the state of the slave device SCL pin.

The IIC master device is connected to the control component through a clock extension indication signal line.

Based on the above control communication control system, the present application proposes a method for implementing clock extension based on an integrated circuit bus IIC to achieve master enabling clock extension.

Refer to Fig. 2, which is a flowchart of a method for implementing clock extension based on an integrated circuit bus IIC provided in an embodiment of the present application.

As shown in Fig. 2, this method is applied to the IIC master device in the communication control system, and the method may include the following steps.

In Step 201, if it is determined to enable clock extension, a first notification is sent to the control device through the clock extension indication signal line, so that the control device maintains a pin on the control device which is connected to the slave device SCL in a low-level state based on the first notification.

In this embodiment, when the control device receives a falling edge of an SCL clock signal, the pin on the control device which is connected to the slave device SCL is controlled in a low-level state and a pin on the control device which is connected to the master device SCL is controlled in a low-level state.

In this embodiment, the SCL clock signal includes a low-level signal and a high-level signal. The transition from high level to low level is called a falling edge of the clock signal, and the transition from low level to high level is called a rising edge of the clock signal. The SCL clock cycle is a preset duration from the beginning of the falling edge of the SCL clock signal, and one SCL clock cycle is for transmission of 1-bit data.

In this embodiment, one SCL clock cycle includes an SCL low-level period and an SCL high-level period. Data on the serial data line SDA changes during the SCL low-level period, and is read from the beginning of the rising edge of the clock signal, which is generated when the SCL low-level period is transitioned to the SCL high-level period. The period during which the data reading is performed may be referred to as a data transmission period, which is a part of the SCL high-level period.

As an embodiment, an SCL clock cycle may include a first half low-level cycle and a last half high-level cycle, which is not limited in the present application.

Here, the falling edge of the SCL clock signal may be a falling edge caused by an SCL low-level period in a normal SCL clock cycle, or a falling edge caused by the control device controlling the pin on the control device which is connected to the slave device SCL based on the first notification to be in a low-level state. The following will provide a detailed description of the above two situations through specific embodiments, which will not be repeated here.

As an embodiment, the first notification is sent within a specified period of the SCL clock cycle after the falling edge of the SCL clock signal is sent. The specified period may include an SCL low-level period and an SCL high-level period except the data transmission period.

For the two different periods for sending the first notification, the following will provide detailed descriptions of the above two situations through specific embodiments, which will not be repeated here.

In Step 202, if it is determined to cancel clock extension, a second notification is sent to the control device through the clock extension indication signal line, so that the control device controls the pin on the control device which is connected to the slave device SCL in a high impedance state based on the second notification.

In this embodiment, the control device will maintain the pin on the control device which is connected to the slave device SCL at a low level until receiving the second notification. As there are no rising edge or falling edge, communication between the IIC master device and the IIC slave device is suspended.

In the case where the IIC master device determines to cancel the clock extension, a second notification indicating the cancellation of the clock extension may be sent through the clock extension indication signal line. Upon receiving the second notification, the control device may control the pin on the control device which is connected to the slave device SCL to be in a high impedance state. At this time, the slave device SCL transitions from low level to high level, generating a rising edge. Data on the SDA line is read, and communication between the IIC master device and the IIC slave device is resumed.

As an embodiment, the pin on the IIC master device which is connected to the master device SCL is in a high impedance state after the IIC master device determines to cancel clock extension.

At the same time as the IIC master device determines to cancel clock extension, the IIC master device may control the pin on the IIC master device which is connected to the master device SCL to be in a high impedance state, to wait for the next SCL clock cycle to begin.

The specific process of enabling clock extension by the master device will be described in detail in the following embodiments, which will not be repeated here.

This concludes the description of the process in Fig. 2.

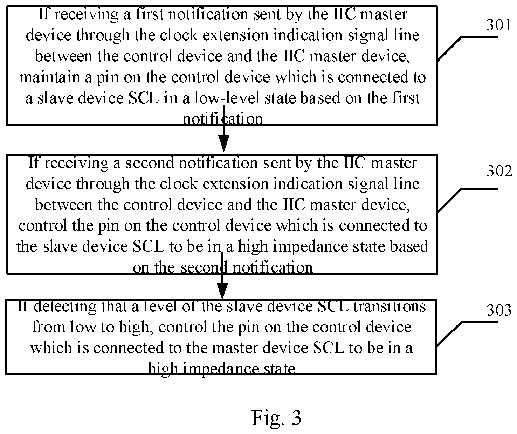

Refer to Fig. 3, which is a flowchart of another method for implementing clock extension based on an integrated circuit bus IIC provided in an embodiment of the present application.

As shown in Fig. 3, this method is applied to the control device in the communication control system, and the method may include the following steps.

In Step 301, if a first notification sent by the IIC master device is received through the clock extension indication signal line between the device and the IIC master device, based on the first notification, the pin on the control device which is connected to the slave device SCL is maintained in a low-level state.

Here, the control device, upon receiving a falling edge of the SCL clock signal, controls the pin on the control device which is connected to the slave device SCL to be in a low-level state, and controls the pin on the control device which is connected to the master device SCL to be in a low-level state.

In Step 302, if a second notification sent by the IIC master device is received through the clock extension indication signal line between the device and the IIC master device, based on the second notification, the pin on the control device which is connected to the slave device SCL is controlled in a high impedance state.

In Step 303, if it is detected that the level of the slave device SCL transitions from low to high, the pin on the control device which is connected to the master device SCL is controlled in a high impedance state.

It is easy to understand that the method in Fig. 3 is described with the control device as the executing entity, and its overall process is similar to the method in Fig. 2.

In this embodiment, the first notification is sent within a specified period of the SCL clock cycle after the IIC master device sends the falling edge of the SCL clock signal. The SCL clock cycle is one SCL clock cycle from the beginning of the falling edge of the SCL clock signal sent by the master device SCL that was received most recently.

Here, the SCL clock cycle includes an SCL low-level period and an SCL high-level period. The SCL high-level period includes a data transmission period. The specified period may include:

the SCL low-level period and the SCL high-level period except the data transmission period.

In this embodiment, the timing of sending the first notification may include the SCL low-level period and the SCL high-level period except the data transmission period.

As an embodiment, if the first notification is sent during the SCL low-level period of the SCL clock cycle after the IIC master device sends the falling edge of the SCL clock signal, the method proposed in this embodiment may further include:

if a second notification sent by the IIC master device through the clock extension indication signal line is received, checking whether the current time is before the end of the SCL low-level period in the SCL clock cycle; if so, end the SCL clock cycle; if not, continue to perform the operation of controlling the pin on the control device which is connected to the slave device SCL to be in a high impedance state based on the second notification.

If no second notification sent by the IIC master device through the clock extension indication signal line is received by the end of the SCL low-level period in the SCL clock cycle, the pin on the control device which is connected to the slave device SCL will continue to be maintained in a low-level state.

In this embodiment, during the SCL low-level period, the SDA line has completed level transition, the level of the SDA line is transitioned into a level signal that needs to be transmitted in the current SCL clock cycle. When the next rising edge appears, the level signal on the SDA line may be transmitted.

If a second notification is received before the end of the SCL low-level period in the SCL clock cycle, it indicates that the clock extension has been canceled before the end of the SCL low-level period. Since both the master device SCL and the slave device SCL are in a low-level state during the SCL low-level period in a conventional signal transmission mechanism, which is equivalent to no clock extension, at this time, data transmission may be carried out normally according to the conventional mechanism, and the recording of the duration of this clock cycle may be ended.

If no second notification is received before the end of the SCL low-level period in the SCL clock cycle, it indicates that the clock extension is still continuing at the end of the SCL low-level period. At this time, if the conventional mechanism is followed, the pin on the control device which is connected to the slave device SCL needs to be adjusted to a high impedance state, and data transmission is carried out on the generated rising edge. However, the solution proposed in this embodiment will continue to maintain the pin on the control device which is connected to the slave device SCL in a low-level state due to the continued clock extension, in order to suspend communication between the IIC master device and the IIC slave device, that is, to suspend the transmission of level signals in the previous SCL clock cycle until the second notification sent by the IIC master device through the clock extension indication signal line is received, and only then the slave device SCL pin connected to the slave device SCL will be controlled to a high impedance state, to resume communication between the IIC master device and the IIC slave device, and to complete the transmission of level signals within the current SCL clock cycle.

It may be seen that the method proposed in this embodiment breaks the limitations of the conventional IIC transmission mechanism. At the end of the SCL low-level period, the pin on the control device which is connected to the slave device SCL will not be directly adjusted to a high impedance state to perform data transmission based on the generated rising edge as it would be in the conventional transmission mechanism. Instead, the slave device SCL pin connected to the slave device SCL will be controlled to a high impedance state only after the second notification is received, in order to resume communication between the IIC master device and the IIC slave device, so that the IIC master device may also initiate clock extension.

In this embodiment, the first notification is sent during the SCL low-level period of the SCL clock cycle after the IIC master device sends the falling edge of the SCL clock signal. The IIC master device enables clock extension to suspend the transmission of level signals within the current SCL clock cycle. After cancelling the clock extension, the level signal transmission is resumed and completed within the current SCL clock cycle.

As an embodiment, the first notification is sent during the SCL high-level period except the data transmission period of the SCL clock cycle after the IIC master device sends the falling edge of the SCL clock signal, and the method proposed in this embodiment may further include:

ending the SCL clock cycle and starting a new SCL clock cycle; if a second notification sent by the IIC master device through the clock extension indication signal line is received, checking whether the current time is before the end of the SCL low-level period in the new SCL clock cycle; if so, ending the new SCL clock cycle; if not, continuing to perform the operation of controlling the pin on the control device which is connected to the slave device SCL to be in a high impedance state based on the second notification; the pin on the IIC master device which is connected to the master device SCL is in a low-level state after the IIC master device determines to enable clock extension.

If no second notification sent by the IIC master device through the clock extension indication signal line is received by the end of the SCL low-level period in the new SCL clock cycle, the pin on the control device which is connected to the slave device SCL will continue to be maintained in a low-level state.

In this embodiment, the first notification is sent during the SCL high-level period except the data transmission period of the SCL clock cycle after the IIC master device sends the falling edge of the SCL clock signal. That is, the clock extension is enabled after the data transmission of the current SCL clock cycle has been completed.

As the clock extension is enabled during the SCL high-level period, after enabling the clock extension, the IIC master device controls the pin on the IIC master device which is connected to the master device SCL to be at a low level, and the control device controls the pin on the control device which is connected to the slave device SCL to be at a low level. At this time, both the master device SCL and the slave device SCL are transitioned from high level to low level. The master device SCL shows a falling edge and enters the next SCL clock cycle (referred to as a new SCL clock cycle). When the control device detects the falling edge of the SCL clock signal, the pin on the control device which is connected to the slave device SCL is controlled in a low-level state, and the pin on the control device which is connected to the master device SCL is in a low-level state.

If a second notification is received before the end of the SCL low-level period in the new SCL clock cycle, it indicates that the clock extension has been canceled before the end of the SCL low-level period. Since both the master device SCL and the slave device SCL are in a low-level state during the SCL low-level period in a conventional signal transmission mechanism, which is equivalent to no clock extension, at this time, the transmission of the level signal in the new SCL clock cycle may be carried out normally according to the conventional mechanism, the recording of the duration of this clock cycle may be ended.

If no second notification is received before the end of the SCL low-level period in the new SCL clock cycle, it indicates that the clock extension is still continuing at the end of the SCL low-level period. At this time, if the conventional mechanism is followed, the pin on the control device which is connected to the slave device SCL needs to be adjusted to a high impedance state, and data transmission is carried out based on the generated rising edge. However, the solution proposed in this embodiment will continue to maintain the pin on the control device which is connected to the slave device SCL in a low-level state due to the continued clock extension, in order to suspend communication between the IIC master device and the IIC slave device, that is, to suspend the transmission of level signals in the new SCL clock cycle until a second notification sent by the IIC master device through the clock extension indication signal line is received, and only then the slave device SCL pin connected to the slave device SCL will be controlled to a high impedance state, to resume communication between the IIC master device and the IIC slave device, and to complete the transmission of level signals within the new SCL clock cycle.

Similarly, the method proposed in this embodiment breaks the limitations of the conventional IIC transmission mechanism. At the end of the SCL low-level period, the pin on the control device which is connected to the slave device SCL will not be directly adjusted to a high impedance state to perform transmission of level signals based on the generated rising edge as it would be in the conventional transmission mechanism. Instead, the slave device SCL pin connected to the slave device SCL will be controlled to a high impedance state only after the second notification is received, in order to resume communication between the IIC master device and the IIC slave device, so that the IIC master device may also initiate clock extension.

In this embodiment, the first notification is sent during the SCL high-level period except the data transmission period of the SCL clock cycle after the IIC master device sends the falling edge of the SCL clock signal. The IIC master device enables clock extension to suspend the data transmission in the new SCL clock cycle (i.e. the next SCL clock cycle after the IIC master device sends the falling edge of the SCL clock signal). After cancelling the clock extension, the data transmission in the new SCL clock cycle is resumed and completed.

The specific process of the master device enabling clock extension will be described in detail in the following embodiments, which will not be repeated here.

This concludes the description of the process in Fig. 3.

The present application additionally provides a clock extension indication signal line between the IIC master device and the control device in the communication control system. When the IIC master device determines to enable clock extension, the IIC master device sends a first notification to the control device through the clock extension indication signal line, so that the control device maintains the slave device SCL pin on the control device which is connected to the slave device SCL in a low-level state based on the first notification. In the absence of a clock extension invalid indication signal, even if the specified period of the SCL clock cycle ends, the control device will not control the slave device SCL pin on the control device which is connected to the slave device SCL in a high impedance state as it would do in the conventional data transmission mechanism. Instead, breaking the limitations of the existing IIC data transmission mechanism, the control device will continue to maintain the slave device SCL pin on the control device which is connected to the slave device SCL in a low-level state to suspend data transmission, until the master device sends a second notification to the control device through the clock extension indication signal line to cancel the clock extension. Only then, the slave device SCL pin connected to the slave device SCL is controlled to be in a high impedance state to resume data transmission, so that the clock extension mechanism in the IIC communication protocol can be implemented without direct connection between SCLs of an IIC master device and an IIC slave device.

The present application also provides an IIC master device, which is an IIC master device in a communication control system. The communication control system further includes an IIC slave device connected to the IIC master device, and a control device connected between the IIC master device and the IIC slave device. A clock extension indication signal line is also connected between the IIC master device and the control device. The IIC master device is configured to perform the method shown in Fig. 2 above.

The present application also provides a control device, which is a control device in a communication control system. The communication control system further includes an IIC master device and an IIC slave device connected to the IIC master device. The control device is connected between the IIC master device and the IIC slave device, and a clock extension indication signal line is also connected between the IIC master device and the control device.

Specifically, the control device may include:
a frequency counter connected for communication to a slave device SCL control module, the frequency counter configured to count at a preset frequency and upon the counting reaches an end of a specified period, trigger the slave device SCL control module to control a pin on the control device which is connected to the slave device SCL to be in a high impedance state;
the slave device SCL control module connected for communication to the frequency counter and a master-slave SCL control module, connected to the IIC slave device through the slave device SCL, and connected to the IIC master device through the clock extension indication signal line, the slave device SCL control module configured to control a state of the pin on the control device which is connected to the slave device SCL based on signals sent by the master-slave SCL control module, the frequency counter, and the clock extension indication signal line;
a first edge detection module connected to the IIC master device through the master device SCL and connected for communication to the master-slave SCL control module, the first edge detection module configured to detect a level transition of the master device SCL;
the master-slave SCL control module connected for communication to the first edge detection module, the slave device SCL control module, and a second edge detection module, connected to the IIC master device through the master device SCL, the master-slave SCL control module configured to, based on detection results of the first edge detection module and the second edge detection module, control a state of a pin on the control device which is connected to the master device SCL and control the slave device SCL control module to cause the slave device SCL control module to control the state of the pin on the control device which is connected to the slave device SCL;
the second edge detection module connected to the IIC slave device through the slave device SCL and connected for communication to the master-slave SCL control module, the second edge detection module configured to detect a level transition of the slave device SCL.

The coordination among various modules in the control device will be described in detail in the specific embodiments below, which will not be repeated here.

The following introduces the communication control system and the method based on an integrated circuit bus IIC proposed in the present application through several specific examples.

### Example 1

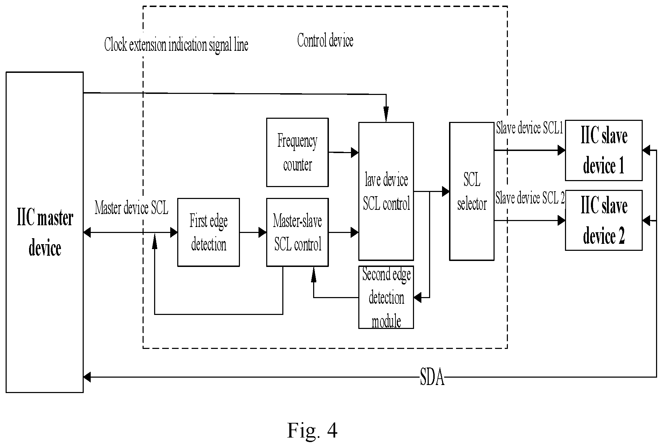

Refer to Fig. 4, which is a schematic diagram of a specific structure of an IIC communication control system provided in an embodiment of the present application.

As shown in Fig. 4, the system includes an IIC master device, a control device, and two IIC slave devices.

Specifically, the control device may include:
a frequency counter connected for communication to a slave device SCL control module, the frequency counter configured to count at a preset frequency and upon the counting reaches an end of a specified period, trigger the slave device SCL control module to control a pin on the control device which is connected to the slave device SCLs to be in a high impedance state;
the slave device SCL control module connected for communication to the frequency counter and a master-slave SCL control module, connected to the IIC slave devices through the slave device SCLs, and connected to the IIC master device through the clock extension indication signal line, the slave device SCL control module configured to control a state of the pin on the control device which is connected to the slave device SCLs based on signals sent by the master-slave SCL control module, the frequency counter, and the clock extension indication signal line;
a first edge detection module connected to the IIC master device through the master device SCL and connected for communication to the master-slave SCL control module, the first edge detection module configured to detect a level transition of the master device SCL;
the master-slave SCL control module connected for communication to the first edge detection module, the slave device SCL control module, and a second edge detection module, connected to the IIC master device through the master device SCL, the master-slave SCL control module configured to, based on detection results of the first edge detection module and the second edge detection module, control a state of a pin on the control device which is connected to the master device SCL and control the slave device SCL control module to cause the slave device SCL control module to control the state of the pin on the control device which is connected to the slave device SCLs;
the second edge detection module connected to the IIC slave devices through the slave device SCLs and connected for communication to the master-slave SCL control module, the second edge detection module configured to detect a level transition of the slave device SCLs;
an SCL selector connected to each of the IIC slave devices through the slave device SCLs and connected for communication to the slave device SCL control module and the second edge detection module, configured to determine an IIC slave device that needs to communicate based on an instruction from the IIC master device.

Based on the above IIC communication control system, the IIC communication control method proposed in the present application will be described below.

Before describing the process of the IIC master device enabling clock extension function, a brief introduction will be given to the level transition mechanism in this IIC communication control system.

In this embodiment, the master device SCL refers to a serial clock line between the IIC master device and the control device, whose level is controlled by both the master device and the control device. When either the master device or the control device controls the pin of the master device SCL to be in a low-level state (referred to as pulling down the master device SCL), the level of the master device SCL is low. When both the master device and the control device control the pin of the master device SCL to be in a high impedance state (referred to as releasing the master device SCL), the level of the master device SCL is high.

Similarly, the slave device SCL refers to a serial clock line between the IIC slave and the control device, whose level is controlled by both the slave device and the control device. When either the slave device or the control device controls the pin of the slave device SCL to a low-level state (referred to as pulling down the slave device SCL), the level of the slave device SCL is low. When both the slave device and the control device control the pin of the slave device SCL to be in a high impedance state (referred to as releasing the slave device SCL), the level of the slave device SCL is high.

It should be noted that the IIC system performs one transmission of level signal during one cycle of the SCL signal. Taking one cycle of the SCL signal including a first 1/2 cycle of low level and a last 1/2 cycle of high level as an example, data on SDA changes during the first 1/2 cycle of low-level period of SCL, and is started to be read on a rising edge generated by transition from low level to high level, that is, it is read during the last 1/2 cycle of high-level period.

Taking a scenario of IIC communication control system executing multi-byte read and write tasks as an example, a method of enabling clock extension function on the IIC master device side will be described below.

In this embodiment, enabling the clock extension function on the master device side refers to enabling the clock extension function during the SCL low-level period in any SCL clock cycle included in the SCL clock signal. In the current scenario, it refers to enabling the clock extension function in the first half of any SCL clock cycle during the process of reading and writing a byte.

In an example where a multi-byte read and write IIC task requires reading and writing 8 bytes of data, during the process of reading data of any byte, such as the second byte, 1 bit of data is read during each SCL clock cycle.

Taking reading the third bit of the second byte in the current SCL clock cycle as an example, at the beginning of the SCL clock cycle corresponding to the third bit, the master device controls the pin on the master device connected to the master device SCL to be at a low level according to the SCL clock signal, and a falling edge occurs on the master device SCL.

When the control device detects the falling edge on the master device SCL through the first edge detection module, the control device indicates the master-slave SCL control module to control the pin on the control device which is connected to the master device SCL to be at a low level, and at the same time, the master-slave SCL control module to control the pin on the control device which is connected to the slave device SCL to be at a low level. (At this time, the master device SCL is in a low-level state pulled low by both the master device and the control device, and the slave device SCL is in a low-level state pulled low by the control device.)

During the first half (SCL low-level period) of the SCL clock cycle for transmitting the third bit, the master device SCL is in a low-level state pulled low by both the master device and the control device, and the slave device SCL is in a low-level state pulled low by the control device.

If there is a task of higher priority that needs to be processed by the IIC master device during the first half of the SCL clock cycle for transmitting the third bit, the clock extension may be actively enabled. A first notification may be sent to the control device through the clock extension indication signal line to maintain the pin on the control device which is connected to the slave device SCL at a low level. At this time, it has to wait for the IIC master device to cancel the clock extension, and communication between the master device and the slave device is suspended. (At this time, the master device SCL is in a low-level state pulled low by both the master device and the control device, and the slave device SCL is in a low-level state pulled low by the control device.)

The IIC frequency counter starts counting at the beginning of the SCL clock cycle corresponding to the third bit. When the master device completes the processing of the task of higher priority, the clock extension may be canceled and a second notification may be sent to the control device through the clock extension indication signal line. When the slave device SCL control module receives the second notification sent by the IIC master device through the clock extension indication signal line, it checks whether the IIC frequency counter has counted up to 1/2 of the SCL clock cycle. If not, it indicates that the clock extension has ended during the SCL low-level period (the first 1/2 cycle) of the SCL clock cycle. At this time, the transmission of the third bit data may be carried out just according to the normal IIC transmission mechanism, and the counting of the IIC frequency counter may be stopped.

If the IIC frequency counter has counted more than 1/2 of the SCL clock cycle, it indicates that the master device is still enabling clock extension, that is, maintaining the pin on the control device which is connected to the master device SCL at a low level. At this time, the master device cancels clock extension, controls the pin on the control device which is connected to the master device SCL to be in a high impedance state, and controls the pin on the control device which is connected to the slave device SCL to be in a high impedance state through the slave device SCL control module. At this time, the slave device SCL transitions from a low level to a high level, generating a clock signal rising edge. The slave device receives or sends the third bit of data through SDA based on the rising edge, and communication between the master device and the slave device is resumed. (At this time, the master device SCL is in a low-level state pulled down by the control device, and the slave device SCL is in a high-level state released by both the control device and the slave device.)

When the control device detects a rising edge in the slave device SCL through the second edge detection module, the control device instructs the master-slave SCL control module to control the pin on the control device which is connected to the master device SCL to be in a high impedance state. (At this time, the master device SCL is released by the control device and the master device, transitioning from a low-level state to a high-level state, while the slave device SCL remains in a high-level state.)

At this point, the clock extension initiated by the master device ends, and the slave device completes the reading of the current third bit data. The master device SCL and the slave device SCL return to a high-level state, proceeding to the reading of the fourth bit data.

This concludes the description of Example 1.

### Example 2

In this example, the IIC communication control method proposed in the present application is described still based on the IIC communication control system shown in Fig. 4.

In this example, the enabling the clock extension function on the master device side is enabled during the SCL high-level period except the data transmission period of the SCL clock cycle. In the current scenario, it refers to enabling the clock extension function during the last half of any SCL clock cycle except the data transmission period during the process of reading or writing a byte.

Still taking the example of the IIC task that requires reading and writing 8 bytes of data for multi-byte reading and writing, during the process of reading data of any byte, such as the second byte, 1 bit of data is read during each SCL clock cycle.

Taking reading the third bit of the second byte in the current SCL clock cycle as an example, in the SCL clock cycle corresponding to the third bit, after completing the transmission of the third bit in the last 1/2 cycle, both the master device SCL and the slave device SCL are in a high-level state at this time.

If there is a task of higher priority that needs to be processed by the IIC master device after completing the transmission of the third bit of data in the last half of the cycle, the clock extension may be actively enabled to control the pin on the IIC master device which is connected to the master device SCL to be at a low level, ending the current SCL clock cycle and starting a new SCL clock cycle (transmitting the SCL clock cycle corresponding to the fourth bit of data). The IIC frequency counter starts counting and sends a first notification to the control device through the clock extension indication signal line. The pin on the control device which is connected to the slave device SCL is at a low level. At this time, it has to wait for the IIC master device to cancel the clock extension, and communication between the master device and the slave device is suspended. (At this time, the master device SCL is pulled low by the master device, transitioning from a high-level state to a low-level state, generating a falling edge. The slave device SCL is pulled low by the control device, transitioning from a high-level state to a low-level state.)

When the control device detects a falling edge on the master SCL through the first edge detection module, the control device controls the pin on the control device which is connected to the slave device SCL to be in a low-level state and controls the pin on the control device which is connected to the master device SCL to be in a low-level state. (At this time, the master device SCL is pulled down by the master device and the control device to be in a low-level state; the slave device SCL is pulled down by the control device to be in a low-level state)

The IIC frequency counter starts counting at the beginning of the new SCL clock cycle corresponding to the fourth bit. When the master device completes the processing of the task of higher priority, the clock extension may be canceled and a second notification may be sent to the control device through the clock extension indication signal line. When the slave device SCL control module receives the second notification sent by the IIC master device through the clock extension indication signal line, it checks whether the IIC frequency counter has counted up to 1/2 of the new SCL clock cycle. If not, it indicates that the clock extension has ended during the SCL low-level period (the first 1/2 cycle) of the new SCL clock cycle. At this time, the transmission of the third bit data may be carried out just according to the normal IIC transmission mechanism, and the counting of the IIC frequency counter may be stopped.

If the IIC frequency counter has counted more than 1/2 of the new SCL clock cycle, it indicates that the master device is still enabling clock extension, that is, maintaining the pin on the control device which is connected to the master device SCL at a low level. At this time, the master device cancels clock extension, controls the pin on the control device which is connected to the master device SCL to be in a high impedance state, and controls the pin on the control device which is connected to the slave device SCL to be in a high impedance state through the slave device SCL control module. At this time, the slave device SCL transitions from a low level to a high level, generating a clock signal rising edge. The slave device receives or sends the fourth bit of data through SDA based on the rising edge, and communication between the master device and the slave device is resumed. (At this time, the master device SCL is in a low-level state pulled down by the control device, and the slave device SCL is in a high-level state released by both the control device and the slave device.)

When the control device detects a rising edge in the slave device SCL through the second edge detection module, the control device instructs the master-slave SCL control module to control the pin on the control device which is connected to the master device SCL to be in a high impedance state. (At this time, the master device SCL is released by the control device and the master device, transitioning from a low-level state to a high-level state, while the slave device SCL remains in a high-level state.)

At this point, the clock extension initiated by the master device ends, and the slave device completes the reading of the current fourth bit data. The master device SCL and the slave device SCL return to a high-level state, proceeding to read the fifth bit data.

This concludes the description of Example 2.

### Example 3

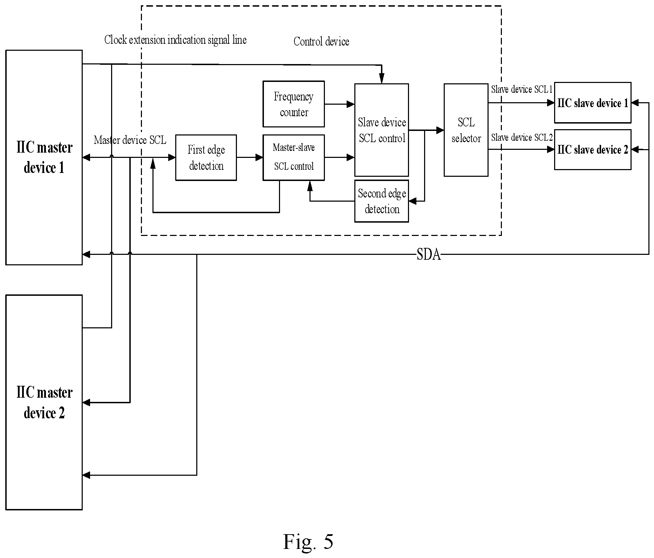

Refer to Fig. 5, which is a schematic diagram of a specific structure of an IIC communication control system provided in an embodiment of the present application.

As shown in Fig. 5, the system includes two IIC master devices, a control device, and two IIC slave devices.

In this embodiment, if IIC master device 1 enables clock extension and suspends data transmission with IIC slave device 1, during this process, IIC master device 2 cannot perform data transmission with IIC slave device 1 because the slave device SCL of IIC slave device 1 has already been occupied by IIC master device 1.

If IIC master device 2 needs to perform data transmission with IIC slave device 1, n IIC master device 2 may only perform data transmission with IIC slave device 1 after IIC master device 1 ends clock extension and releases its occupation of IIC slave device 1.

This concludes the description of Example 2.

### Example 4

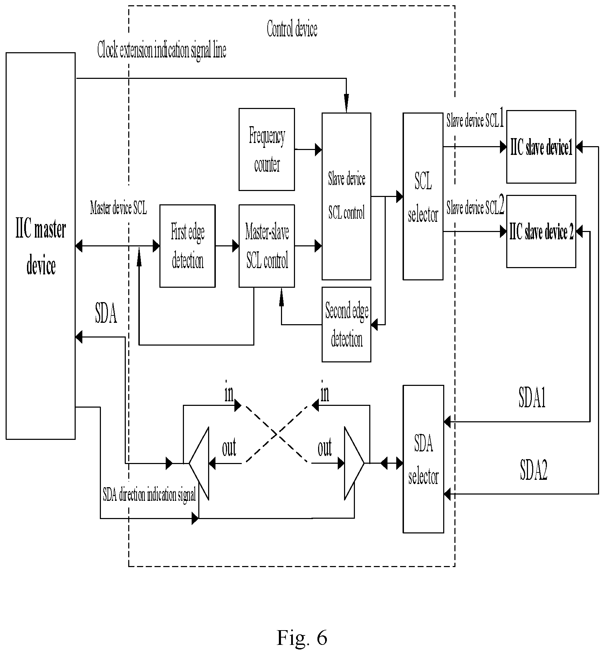

Refer to Fig. 6, which is a specific structural diagram of another communication control system provided in an embodiment of the present application.

In the above Example 1, since the SDA signal line is level sampled rather than edge sampled, the SDA signal line may be directly connected to various master devices without the need for a control device, which may save resource of the control device.

In this embodiment, as shown in Fig. 6, a structure is provided in which an SDA signal line passes through the control device. It is necessary to additionally provide an SDA direction indication signal line in the control device to open the corresponding transmission path according to the direction indication of data transmission.

Meanwhile, in the presence of multiple IIC slave devices, an SDA selector may be additionally provided to the control device to determine the IIC slave device that needs to communicate based on instruction from the IIC master device.

This concludes the description of Example 4.

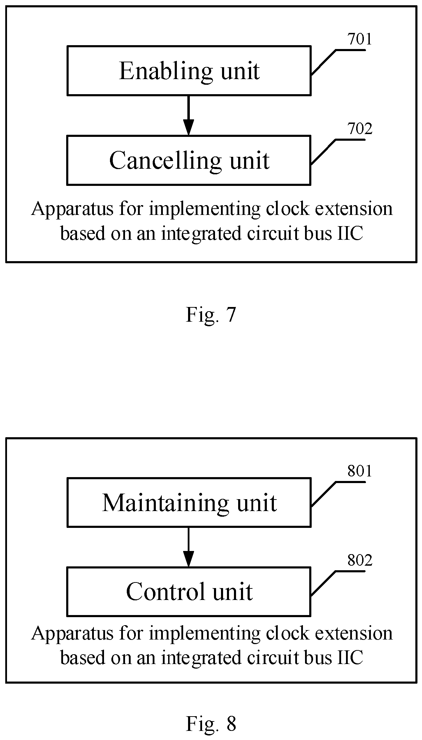

Refer to Fig. 7, which is a structural diagram of an apparatus for implementing clock extension based on an integrated circuit bus IIC proposed in this embodiment of the present application. The apparatus is applied to an IIC master device in a communication control system. The communication control system further includes an IIC slave device connected to the IIC master device, and a control device connected between the IIC master device and the IIC slave device. A clock extension indication signal line is also connected between the IIC master device and the control device. As shown in Fig. 7, the apparatus may include an enabling unit 701 and a cancelling unit 702. Specifically, the apparatus includes:
an enabling unit 701 configured to, if determining to enable clock extension, send a first notification to the control device through the clock extension indication signal line, so that the control device maintains a pin on the control device which is connected to a slave device SCL in a low-level state based on the first notification; wherein when the control device receives a falling edge of an SCL clock signal, the control device controls the pin on the control device which is connected to the slave device SCL to be in a low-level state and controls a pin on the control device which is connected to a master device SCL to be in a low-level state;
a cancelling unit 702 configured to, if determining to cancel clock extension, send a second notification to the control device through the clock extension indication signal line, so that the control device controls the pin on the control device which is connected to the slave device SCL in a high impedance state based on the second notification.

Optionally, the control device includes a slave device SCL control component; the slave device SCL control component is configured to control a state of the pin on the control device which is connected to the slave device SCL;
the IIC master device is connected to the slave device SCL control component through the clock extension indication signal line.

Optionally, the pin on the IIC master device which is connected to the master device SCL is in a high impedance state after the IIC master device determines to cancel clock extension.

Optionally, the first notification is sent within a specified period of an SCL clock cycle after the falling edge of the SCL clock signal is sent, and the SCL clock cycle is a preset duration from a beginning of the falling edge of the SCL clock signal.

Optionally, the SCL clock cycle includes an SCL low-level period and an SCL high-level period, the SCL high-level period includes a data transmission period, the specified period includes:
the SCL low-level period and the SCL high-level period except for the data transmission period.

This concludes the description of the structure diagram of the apparatus for implementing clock extension based on an integrated circuit bus IIC in Fig. 7.

Refer to Fig. 8, which is a structural diagram of an apparatus for implementing clock extension based on an integrated circuit bus proposed in an embodiment of the present application, applied to a control device in a communication control system. The communication control system further includes an IIC master device and an IIC slave device connected to the IIC master device. The control device is connected between the IIC master device and the IIC slave device, and a clock extension indication signal line is also connected between the control device and the IIC master device. As shown in Fig. 8, the apparatus may include a maintaining unit 801 and a control unit 802. Specifically, the apparatus includes:
a maintaining unit 801 configured to, if receiving a first notification sent by the IIC master device through the clock extension indication signal line between the device and the IIC master device, based on the first notification, maintain a pin on the control device which is connected to a slave device SCL in a low-level state; wherein when the control device receives a falling edge of the SCL clock signal, the control device controls the pin on the control device which is connected to the slave device SCL to be in a low-level state, and controls a pin on the control device which is connected to a master device SCL to be in a low-level state;
a control unit 802 configured to, if receiving a second notification sent by the IIC master device through the clock extension indication signal line between the device and the IIC master device, control the pin on the control device which is connected to the slave device SCL in a high impedance state based on the second notification; if detecting that a level of the slave device SCL transitions from low to high, control the pin on the control device which is connected to the master device SCL in a high impedance state.

Optionally, the control device includes a slave device SCL control component; the slave device SCL control component is configured to control a state of the pin on the control device which is connected to the slave device SCL;
the slave device SCL control component is connected to the IIC master device through a clock extension indication signal line.

Optionally, the first notification is sent within a specified period of an SCL clock cycle after the IIC master device sends the falling edge of the SCL clock signal; the SCL clock cycle is one SCL clock cycle from a beginning of the falling edge of the SCL clock signal sent by the master device SCL that was received most recently.

Optionally, the SCL clock cycle includes an SCL low-level period and an SCL high-level period, the SCL high-level period includes a data transmission period, the specified period includes:

the SCL low-level period and the SCL high-level period except for the data transmission period.

Optionally, the first notification is sent during the SCL low-level period of the SCL clock cycle after the IIC master device sends the falling edge of the SCL clock signal, and the control unit 802 is further configured to:
if receiving a second notification sent by the IIC master device through the clock extension indication signal line, check whether the current time is before an end of the SCL low-level period of the SCL clock cycle; if so, end the SCL clock cycle; if not, continue to perform the operation of controlling the pin on the control device which is connected to the slave device SCL to be in a high impedance state based on the second notification.

Optionally, the first notification is sent during the SCL low-level period of an SCL clock cycle after the IIC master device sends the falling edge of the SCL clock signal, and the control unit 802 is further configured to:
if no second notification sent by the IIC master device through the clock extension indication signal line is received by the end of the SCL low-level period of the SCL clock cycle, continue to be maintain the pin on the control device which is connected to the slave device SCL in a low-level state.

Optionally, the first notification is sent during the SCL high-level period except the data transmission period of the SCL clock cycle after the IIC master device sends the falling edge of the SCL clock signal, the control unit 802 is further configured to:
end the SCL clock cycle and start a new SCL clock cycle; if a second notification is received from the IIC master device through the clock extension indication signal line, check whether a current time is before an end of the SCL low-level period in the new SCL clock cycle; if so, end the new SCL clock cycle; if not, continue to perform the operation of controlling the pin on the control device which is connected to the slave device SCL to be in a high impedance state based on the second notification; the pin on the IIC master device which is connected to the master device SCL is in a low-level state after the IIC master device determines to enable clock extension.

Optionally, the first notification is sent during the SCL high-level period except the data transmission period of the SCL clock cycle after the IIC master device sends the falling edge of the SCL clock signal. The control unit 802 is further configured to:
end the SCL clock cycle and start a new SCL clock cycle, if no second notification sent by the IIC master device through the clock extension indication signal line is received by the end of the SCL low-level period in the new SCL clock cycle, continue to maintain the pin on the control device which is connected to the slave device SCL in a low-level state; the pin on the IIC master device which is connected to the master device SCL is in a low-level state after the IIC master device determines to enable clock extension.

This concludes the description of the structure diagram of another apparatus for implementing clock extension based on an integrated circuit bus in Fig. 8.

The above are only the preferred embodiments of the present application and are not intended to limit the present application. For those skilled in the art, the present application may have various modifications and variations.

## Claims

1. A method for implementing clock extension based on an integrated circuit bus IIC, wherein the method is applied to an IIC master device in a communication control system; the communication control system further comprises an IIC slave device connected to the IIC master device, and a control device connected between the IIC master device and the IIC slave device; a clock extension indication signal line is also connected between the IIC master device and the control device; the method comprises:
if determining to enable clock extension, sending (201) a first notification to the control device through the clock extension indication signal line, so that the control device maintains a pin on the control device which is connected to a slave device SCL in a low-level state based on the first notification; wherein when the control device receives a falling edge of an SCL clock signal, the control device controls the pin on the control device which is connected to the slave device SCL be in a low-level state and controls a pin on the control device which is connected to a master device SCL to be in a low-level state;
if determining to cancel clock extension, sending (202) a second notification to the control device through the clock extension indication signal line, so that the control device controls the pin on the control device which is connected to the slave device SCL to be in a high impedance state based on the second notification.

2. The method of claim 1, wherein the control device comprises a slave device SCL control component; the slave device SCL control component is configured to control a state of the pin on the control device which is connected to the slave device SCL;
the IIC master device is connected to the slave device SCL control component through the clock extension indication signal line.

3. The method of claim 1 or 2, wherein the pin on the IIC master device which is connected to the master device SCL is in a high impedance state after the IIC master device determines to cancel clock extension.

4. The method of any one of claims 1 to 3, wherein the first notification is sent within a specified period of an SCL clock cycle after the falling edge of the SCL clock signal is sent, and the SCL clock cycle is a preset duration from a beginning of the falling edge of the SCL clock signal.

5. The method of claim 4, wherein the SCL clock cycle comprises an SCL low-level period and an SCL high-level period, the SCL high-level period comprises a data transmission period, and the specified period comprises:
the SCL low-level period and the SCL high-level period except the data transmission period.

6. A method for implementing clock extension based on an integrated circuit bus IIC, wherein the method is applied to a control device in a communication control system; the communication control system further comprises an IIC master device and an IIC slave device connected to the IIC master device; the control device is connected between the IIC master device and the IIC slave device, and a clock extension indication signal line is also connected between the control device and the IIC master device; the method comprises:
if receiving a first notification sent by the IIC master device through the clock extension indication signal line between the control device and the IIC master device, maintaining (301) a pin on the control device which is connected to a slave device SCL in a low-level state based on the first notification, wherein when the control device receives a falling edge of the SCL clock signal, the control device controls the pin on the control device which is connected to the slave device SCL to be in a low-level state and controls a pin on the control device which is connected to a master device SCL to be in a low-level state;
if receiving a second notification sent by the IIC master device through the clock extension indication signal line between the control device and the IIC master device, controlling (302) the pin on the control device which is connected to the slave device SCL to be in a high impedance state based on the second notification;
if detecting that a level of the slave device SCL transitions from low to high, controlling (303) the pin on the control device which is connected to the master device SCL to be in a high impedance state.

7. The method of claim 6, wherein the control device comprises a slave device SCL control component; the slave device SCL control component is configured to control a state of the pin on the control device which is connected to the slave device SCL;
the slave device SCL control component is connected to the IIC master device through the clock extension indication signal line.

8. The method of claim 6 or 7, wherein the first notification is sent within a specified period of an SCL clock cycle after the IIC master device sends the falling edge of the SCL clock signal; the SCL clock cycle is one SCL clock cycle from a beginning of the falling edge of the SCL clock signal sent by the master device SCL that was received most recently.

9. The method of claim 8, wherein the SCL clock cycle comprises an SCL low-level period and an SCL high-level period, the SCL high-level period comprises a data transmission period, and the specified period comprises:
the SCL low-level period and the SCL high-level period except the data transmission period.

10. The method of claim 9, wherein the first notification is sent during the SCL low-level period of the SCL clock cycle after the IIC master device sends the falling edge of the SCL clock signal, and the method further comprises:
if receiving a second notification sent by the IIC master device through the clock extension indication signal line, checking whether a current time is before an end of the SCL low-level period of the SCL clock cycle; if so, ending the SCL clock cycle; if not, continuing to perform the operation of controlling the pin on the control device which is connected to the slave device SCL to be in a high impedance state based on the second notification.

11. The method of claim 9 or 10, wherein the first notification is sent during the SCL low-level period of the SCL clock cycle after the IIC master device sends the falling edge of the SCL clock signal, and the method further comprises:
if no second notification sent by the IIC master device through the clock extension indication signal line is received by an end of the SCL low-level period in the SCL clock cycle, continuing to maintain the pin on the control device which is connected to the slave device SCL in a low-level state.

12. The method of any one of claims 9 to 11, wherein the first notification is sent during the SCL high-level period except the data transmission period of the SCL clock cycle after the IIC master device sends the falling edge of the SCL clock signal, the method further comprises:
ending the SCL clock cycle and starting a new SCL clock cycle; if a second notification is received from the IIC master device through the clock extension indication signal line, checking whether a current time is before an end of the SCL low-level period in the new SCL clock cycle; if so, ending the new SCL clock cycle; if not, continuing to perform the operation of controlling the pin on the control device which is connected to the slave device SCL to be in a high impedance state based on the second notification; the pin on the IIC master device which is connected to the master device SCL is in a low-level state after the IIC master device determines to enable clock extension.

13. The method of any one of claims 9 to 12, wherein the first notification is sent during the SCL high-level period except the data transmission period of the SCL clock cycle after the IIC master device sends the falling edge of the SCL clock signal, the method further comprises:
ending the SCL clock cycle and starting a new SCL clock cycle; if no second notification sent by the IIC master device through the clock extension indication signal line is received by an end of the SCL low-level period in the new SCL clock cycle, continuing to maintain the pin on the control device which is connected to the slave device SCL in a low-level state; the pin on the IIC master device which is connected to the master device SCL is in a low-level state after the IIC master device determines to enable clock extension.

14. An apparatus configured for performing the method according to any one of claims 1 to 5 for implementing clock extension based on an integrated circuit bus IIC, wherein the apparatus is applied to an IIC master device in a communication control system; the communication control system further comprises an IIC slave device connected to the IIC master device, and a control device connected between the IIC master device and the IIC slave device; a clock extension indication signal line is also connected between the IIC master device and the control device; the apparatus comprises:
an enabling unit configured to, if determining to enable clock extension, send a first notification to the control device through the clock extension indication signal line, so that the control device maintains a pin on the control device which is connected to a slave device SCL in a low-level state based on the first notification; wherein when the control device receives a falling edge of an SCL clock signal, the control device controls the pin on the control device which is connected to the slave device SCL to be in a low-level state and controls a pin on the control device which is connected to a master device SCL to be in a low-level state;
a cancelling unit configured to, if determining to cancel clock extension, send a second notification to the control device through the clock extension indication signal line, so that the control device controls the pin on the control device which is connected to the slave device SCL based on the second notification to be in a high impedance state.

15. An apparatus configured for performing the method according to any one of claims 6 to 13 for implementing clock extension based on an integrated circuit bus IIC, wherein the apparatus is applied to a control device in a communication control system; the communication control system further comprises an IIC master device and an IIC slave device connected to the IIC master device; the control device is connected between the IIC master device and the IIC slave device, and a clock extension indication signal line is also connected between the control device and the IIC master device; the apparatus comprises:
a maintaining unit configured to, if receiving a first notification sent by the IIC master device through the clock extension indication signal line between the control device and the IIC master device, maintain a pin on the control device which is connected to a slave device SCL in a low-level state based on the first notification, wherein when the control device receives a falling edge of an SCL clock signal, the control device controls the pin on the control device which is connected to the slave device SCL to be in a low-level state and controls a pin on the control device which is connected to a master device SCL to be in a low-level state;
a control unit configured to, if receiving a second notification sent by the IIC master device through the clock extension indication signal line between the control device and the IIC master device, control the pin on the control device which is connected to the slave device SCL to be in a high impedance state based on the second notification; if detecting that a level of the slave device SCL transitions from low to high, control the pin on the control device which is connected to the master device SCL to be in a high impedance state.
